# EUROPÄISCHE PATENTSCHRIFT

(11) **EP 0 395 868 B1**
(45) Veröffentlichungstag und Bekanntmachung des Hinweises auf die Patenterteilung: **26.05.1993**
(21) Anmeldenummer: 90105301.7
(22) Anmeldetag: 21.03.1990
(51) Int. Cl.: A47J 31/057, A47G 19/12

(54) **Glaskanne mit Kunststoffdeckel für eine Kaffee- oder Teemaschine**
Glass vessel with plastic lid for a coffee or tea maker
Récipient en verre avec couvercle en matière plastique, pour une machine à café ou thé

(30) Priorität: 05.05.1989 DE 3914852
(43) Veröffentlichungstag der Anmeldung: 07.11.1990
(73) Patentinhaber: Melitta Haushaltsprodukte GmbH & Co. Kommanditgesellschaft, D-32371 Minden (DE)
(72) Erfinder: Salomon, Thomas, Dipl.-Ing., D-4815 Schloss Holte (DE)
(74) Vertreter: Stracke, Alexander, Dipl.-Ing.

(56) Entgegenhaltungen:
- DE-A- 2 540 211
- DE-A- 2 621 025
- DE-U- 8 810 770
- GB-A- 2 113 813

## Beschreibung

Die vorliegende Erfindung betrifft eine Glaskanne mit Kunststoffdeckel für eine Kaffee- oder Teemaschine, deren Filtergefäß mit einem mechanischen und von einem am Kunststoffdeckel der Glaskanne angebrachten Auslösepilz betätigbaren Auslaufverschluß versehen ist.

Kaffee- oder Teemaschinen werden häufig mit einem Filtergefäß ausgestattet, welches einen mechanisch betätigbaren Auslaufverschluß, den man allgemein auch als Nachtropfsperre bezeichnet, versehen ist. Ein am Kunststoffdeckel der Glaskanne angebrachte Auslösepilz fungiert als Steuerglied für die Betätigung des Auslaufverschlusses in der Weise, daß der Auslaufverschluß in seine Offenstellung bewegt wird, solange die Glaskanne an ihrem bestimmungsgemäßen Ort unterhalb des Filtergefäßes steht und daß der Auslaufverschluß in seine Schließlage bewegt wird, sobald die Glaskanne mit dem Kunststoffdeckel von der Kaffee-oder Teemaschine entnommen wird.

Eine dirartige Kaffeekanne ist aus der DE-A-2621 025 bekannt.

Hierdurch wird verhindert, daß im Falle der Entnahme der Glaskanne bei noch nicht vollständig entleertem Filtergefäß Kaffee oder Tee unkontrolliert auslaufen und auf die zumeist unterhalb des Filtergefäßes angeordnete und als Stellplatz für die Glaskanne dienende Warmhalteplatte tropfen kann.

Voraussetzung für das wirkungsvolle Zusammenspiel von Auslaufverschluß und Auslösepilz ist hierbei, daß der Auslösepilz - bezogen auf die Aufstandsebene der Glaskanneeine exakt definierte Höhenlage aufweist.

Dies ist bei den bisher bekannten Konstruktionen von Glaskannen mit Kunststoffdeckel nicht gewährleistet, und zwar deshalb nicht, weil der Kunststoffdeckel nebst Auslöspilze einstückig gefertigt ist. Der Kunststoffdeckel kann zwar mit geringen Toleranzen hergestellt werden, dies ist aber bei der Herstellung von Glaskannen nicht möglich, so daß sich hier doch beträchtliche Abweichungen der Höhenlage des Auslösepilzes bezogen auf die Aufstandsebene einer Glaskanne ergeben können.

Der vorliegenden Erfindung liegt die Aufgabe zugrunde, eine Glaskanne mit Kunststoffdeckel für den angegebenen Zweck zu schaffen bei der das Einstellen eines vorbestimmten Abstandes des Auslösepilzes zur Aufstandsebene der Glaskanne mit einfachen und kostengünstigen Mitteln möglich ist.

Diese Aufgabe wird erfindungsgemäß dadurch gelöst, daß der Auslösepilze als separates Bauteil ausgebildet und in einer exakt vorbestimmten Höhenlage bezüglich der Aufstandsebene der Glaskanne mit dem Kunststoffdeckel im übrigen verbunden ist.

Diese Bauweise ermöglicht es, bei der Herstellung von Glaskannen mit Kunststoffdeckeln und Auslösepilz auch bei groben Toleranzen im Bereich der Glaskannenfertigung sicherzustellen, daß der Auslösepilz in jedem Falle eine exakte Höhenlage bezüglich der Aufstansebene der Glaskanne einnimmt. Der separat gefertigte Auslösepilz kann nach der Einstellung der vorbestimmten Höhenlage kraft- oder formschlüssig oder durch Adhäsionswirkung mit dem Kunststoffdeckel im übrigen verbunden werden.

Beispielsweise kann der Auslösepilz mit dem Kunststoffdeckel verschweißt oder verklebt werden. Er kann auch mit dem Kunststoffdeckel im übrigen verschraubt sein.

Bei der letzt genannten Lösung wären u.U. sogar noch Nachstellmöglichkeiten für den Benutzer einer Kaffee- oder Teemaschine möglich, falls sich herausstellt, daß im Bereich des Filtergefäßes und dessen Auslaufverschluß überraschenderweise große Toleranzen vorhanden sein sollten.

Deitere Meskmale den Enfindung sind Gegenstand des Anspruchs 4.

Ausführungsbeispiele der Erfindung sind in den beigefügten Zeichnungen dargestellt und werden im folgenden näher beschrieben. Es zeigen:
- Fig. 1: einen Vertikalschnitt durch eine erfindungsgemäße Glaskanne mit Kunststoffdeckel
- Fig. 2: einen Teilschnitt durch einen Kusntstoffdeckel einer erfindungsgemäßen Glaskanne nach einem weiteren Ausführungsbeispiel der Erfindung.

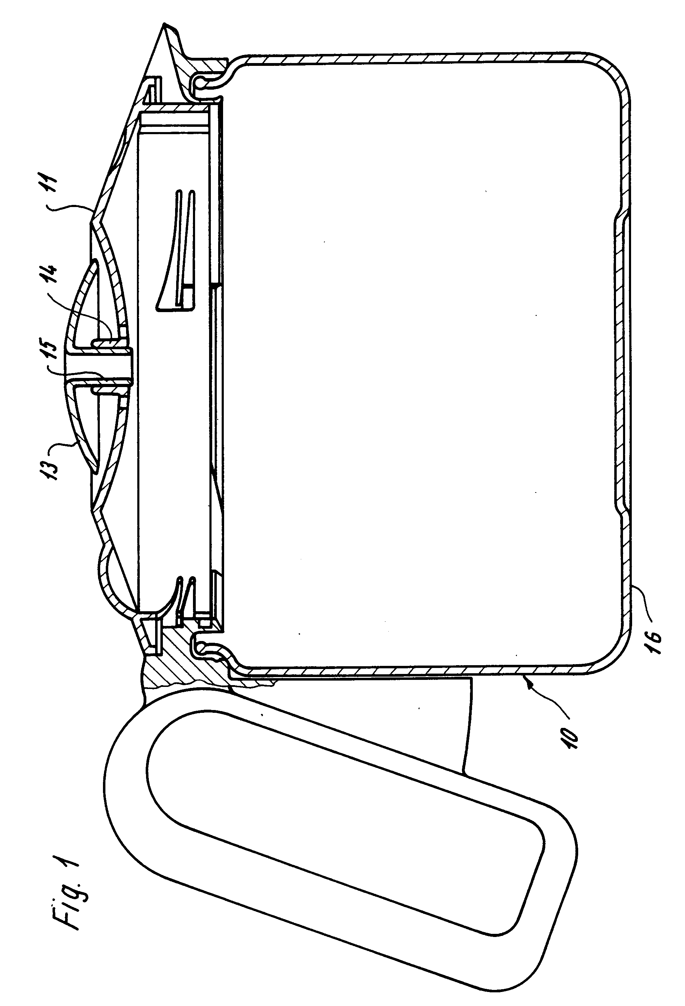

In Fig. 1 ist mit dem Bezugszeichen 10 eine mit einem Kunststoffdeckel 11 versehene Glaskanne für eine Kaffee- oder Teemaschine bezeichnet, wobei der Kunststoffdeckel 11 einen Auslösepilz 13 für die Betätigung eines mechanischen Auslaufverschlusses eines Filtergefäßes einer Kaffee- oder Teemaschine versehen ist. Fig. 1 macht deutlich, daß der Auslösepilz 13 als separates Bauteil ausgebildet ist. Der Auslösepilz 13 ist mit dem Kunststoffdekkel 11 im übrigen fest verbunden, und zwar im Bereich eines zylindrischen Bundes 14, in den ein Stutzen 15 des Auslösepilzes 13 hineinragt. Die Verbindung des Auslösepilzes 13 mit dem Kunststoffdeckel 11 im übrigen erfolgt, nachdem der Auslösepilz 13 in eine exakt vorbestimmte Höhenlage bezüglich der Aufstandsebene 16 der Glaskanne 10 gebracht worden ist.

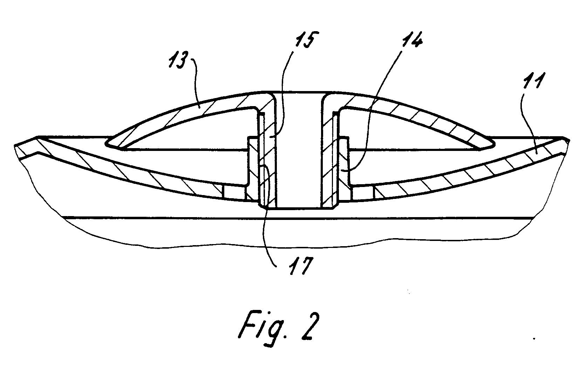

Fig. 2 zeigt einen Teilschnitt durch einen Kunststoffdeckel 11, bei dem der Auslösepilz 13 wiederum als separates Bauteil ausgebildet ist. Der Auslösepilz 13 weist wieder einen Stutzen 15 auf, der in einen zylindrischen Bund 14 des Kunststoffdeckels 11 eingreift. Bei diesem Ausführungsbeispiel ist der Stutzen 15 ebenso wie der zylindrische Bund 14 mit Gewinde 17 versehen, so daß der Auslösepilz 13 mehr oder weniger weit in diesen zylindrischen Bund 14 eingeschraubt werden kann. Durch diese Möglichkeit ist ebenfalls die Einstellung einer exakt vorbestimmten Höhenlage des Auslösepilzes 13 bezüglich der Aufstandsebene einer Glaskanne 10 möglich.

## Patentansprüche

1. Glaskanne (10) mit Kunststoffdeckel (10) für eine Kaffee- oder Teemaschine, deren Filtergefäß mit einem mechanischen und von einem am Kunststoffdeckel (11) der Glaskanne (10) angebrachten Auslösepilz (13) betätigbaren Auslaufverschluß versehen ist, **dadurch gekennzeichnet,** daß der Auslösepilz (13) als separates Bauteil ausgebildet und in einer exakt vorbestimmten Höhenlage bezüglich der Aufstandsebene (16) der Glaskanne (10) mit dem Kunststoffdeckel (11) im übrigen verbunden ist.

2. Glaskanne nach Anspruch 1, dadurch gekennzeichnet, daß der Auslösepilz (13) mit dem Kunststoffdeckel (11) im übrigen durch Verschweißen, Verkleben od.dgl. fest verbunden ist.

3. Glaskanne nach Anspruch 1, dadurch gekennzeichnet, daß der Auslösepilz (13) mit dem Kunststoffdeckel (11) im übrigen verschraubt ist.

4. Glaskanne nach einem oder mehreren der vorhergehenden Ansprüche, dadurch gekennzeichnet, daß der Auslösepilze (13) mit einem Stutzen (15) versehen ist, der in einen zylindrischen Bund (14) des Kunststoffdeckels (11) hineinragt.

## Claims

1. Glass can (10) with plastics material lid (11) for a coffee or tea machine, the filter vessel of which is provided with an outlet closure actuable mechanically and by a release button (13) mounted on the plastics material lid (11) of the glass can (10), characterised thereby that the release button (13) is constructed as a separate component and is however connected with the plastics material lid (11) in an exactly predetermined height position with respect to the support plane (16) of the glass can (10).

2. Glass can according to claim 1, characterised thereby that the release button (13) is however firmly connected with the plastics material lid (11) by welding, gluing or the like.

3. Glass can according to claim 1, characterised thereby that the release button (13) is however screwed to the plastics material lid (11).

4. Glass can according to one or more of the preceding claims, characterised thereby that the release button (13) is provided with a stub (15), which projects into a cylindrical collar (14) of the plastics material lid (11).

## Revendications

1. Récipient en verre (10) à couvercle en matière plastique (11), pour utilisation dans une machine à café ou à thé dont le récipient filtrant est équipé d'une fermeture mécanique à déclenchement actionnée par un champignon de décharge (13) monté sur le couvercle (11), caractérisé en ce que le champignon de décharge (13) est réalisé à l'état de pièce séparée qui est rendue solidaire du couvercle (11) après avoir été placée exactement à une hauteur donnée par rapport au plan d'assise (16) du récipient en verre (10).

2. Récipient en verre selon la revendication 1, caractérisé en ce que le champignon de décharge (13) est rendu solidaire du couvercle en plastique (11) par soudure, collage ou procédé analogue.

3. Récipient en verre selon la revendication 1, caractérisé en ce que le champignon de décharge (13) est relié au couvercle en plastique (11) par vissage.

4. Récipient en verre selon une ou plusieurs des revendications précédentes, caractérisé en ce que le champignon de décharge (13) est équipé d'une tubulure (15) pénétrant dans un collet (14) du couvercle en plastique (11).
